**Europäisches Patentamt**

(19) **European Patent Office**

**Office européen des brevets**

(11) Veröffentlichungsnummer: **0 131 784**
**B1**

(12) **EUROPÄISCHE PATENTSCHRIFT**

(45) Veröffentlichungstag der Patentschrift:
**24.09.86**

(21) Anmeldenummer: **84107142.6**

(22) Anmeldetag: **22.06.84**

(51) Int. Cl.⁴: **B 23 B 5/12**

(54) Schälwerkzeug.

(30) Priorität: **13.07.83 DE 3325286**

(43) Veröffentlichungstag der Anmeldung:
**23.01.85 Patentblatt 85/4**

(45) Bekanntmachung des Hinweises auf die Patenterteilung:
**24.09.86 Patentblatt 86/39**

(84) Benannte Vertragsstaaten:
**DE FR GB SE**

(56) Entgegenhaltungen:
**DE-A-1 941 982**
**DE-A-3 001 330**
**DE-A-3 008 547**
**DE-B-2 506 902**
**US-A-3 683 473**

(73) Patentinhaber: **Fried. Krupp Gesellschaft mit beschränkter Haftung, Altendorfer Strasse 103, D-4300 Essen 1 (DE)**

(72) Erfinder: **Jester, Willi, Langenbochumer Strasse 427, D-4352 Herten 6 (DE)**
Erfinder: **Reiter, Norbert, Dr., Hunsrückstrasse 29, D-4020 Mettmann (DE)**

LIBER, STOCKHOLM 1986

## Beschreibung

Die Erfindung betrifft ein Werkzeug mit einem Halter und einem Schneideinsatz für den umlaufenden Messerkopf einer Schälmaschine zum Schälen von Rundmaterial, wie Rohren, Rundstahl od. dgl., wobei der Schneideinsatz mindestens je eine Haupt- und eine Nebenschneide aufweist.

Im allgemeinen sind vier solcher Werkzeuge im umlaufenden Messerkopf einer Schälmaschine angeordnet. Dabei sollen sich die Schneidkräfte zwischen den Werkzeugen und dem zu schälenden Rundmaterial möglichst symmetrisch ergeben, damit weder auf den Werkzeugkopf noch auf das Rundmaterial Biegemomente ausgeübt werden, die die gewünschte Fertigungsgenauigkeit des geschälten Rundmaterials beeinträchtigen. Dazu müssen insbesondere die Nebenschneiden genau parallel zur Mittelachse des Rundmaterials ausgerichtet sein.

Bei einem bekannten Schälwerkzeug ist eine mit je zweimal zwei Haupt- und Nebenschneiden versehene Wendeschneidplatte in einer entsprechenden Ausnehmung eines Halters eingelassen und mit einer Pratze oder Spannklaue am Halter befestigt. Der Halter selber ist im wesentlichen zweiteilig aus einem Grundkörper mit einer Längsnut und aus einem darin verschiebbaren Stellteil, dessen Lage relativ zum Grundkörper mit einer Stiftschraube eingestellt und mit Hilfe einer durch ein im Grundkörper befindliches Langloch gehenden Klemmschraube fixiert werden kann, ausgebildet.

Aus wirtschaftlichen Gründen können der Halter und die Wendeschneidplatte nicht beliebig genau gefertigt werden. Da sich Maßabweichungen addieren können, kann sich bei dem bekannten Werkzeug eine ungünstige Winkelstellung der Nebenschneide einstellen. Eine solche ungünstige Winkellage kann dadurch korrigiert werden, daß die am Halter befestigte Wendeschneidplatte nachgeschliffen wird. Dies führt aber wiederum zu unerwünschten Standzeiteinbußen.

Bei einem Schälwerkzeug mit konvex ausgebildeter Schneide ist eine Winkelverstellung des Halters bekannt, die um den Mittelpunkt der kreisbogenförmigen Schneide erfolgt (vgl. z. B. DE-OS 30 08 547). Eine solche Verstellung vermag aber bei Werkzeugen mit geraden Haupt- und Nebenschneiden keine Abhilfe zu schaffen, da dabei auch die Hauptschneide in axialer Richtung des zu schälenden Rundmaterials verstellt würde, wodurch gegenüber den anderen an dem Messerkopf befindlichen Werkzeugen an dieser Stelle ein dickerer - oder dünnerer - Span erzeugt wird, der die erwünschte symmetrische Kräfteverteilung stören würde.

Weiterhin ist aus der DE-PS 22 10 816 ein Wellenschälwerkzeug bekannt, bei dem ein mit zweimal zwei Haupt- und Nebenschneiden versehener Wendeschneidkörper in einer entsprechenden Ausnehmung des Halters angeordnet und von einem Stellkeil in seiner Winkellage einstellbar ist. Beim Nachstellen der Winkellage der Nebenschneide wird der Wendeschneidkörper im wesentlichen um seine von der im Einsatz befindlichen Hauptschneide abgewandten Stirnseite geschwenkt, wodurch der von der dem zu schälenden Material zugewandten Haupt- und Nebenschneide gebildete Schnittpunkt eine Bewegung radial zum Rundmaterial vollzieht. Bei diesem bekannten Werkzeug kann es daher notwendig sein, nach der Winkeleinstellung der Nebenschneide auch noch einmal die radiale Einstellung des ganzen Werkzeugs nachzujustieren. Weiterhin ist an diesem bekannten Werkzeug nachteilig, daß es je nach der eingestellten Winkellage des Wendeschneidkörpers zumindest an einer Stelle zwischen der oben bezeichneten Stirnseite des Wendeschneidkörpers und der entsprechenden Aufnahme im Halter zu einer linienförmigen Belastung kommen kann.

Der Erfindung liegt die Aufgabe zugrunde, ein Schälwerkzeug mit mindestens einer Haupt- und Nebenschneide anzugeben, bei dem - bei gleicher Dicke des von der Hauptschneide eines jeden im Messerkopf angeordneten Schälwerkzeugs erzeugten Spans - eine genaue Parallelstellung der Nebenschneide zur Mittelachse des zu schälenden Rundmaterials - bzw. eine genaue Rechtwinkligkeit zur Rückseite des Halters - erreichbar ist, ohne die Nebenschneide nachschleifen oder das ganze Werkzeug radial nachjustieren zu müssen. Dabei soll auch eine feinfühlige Einstellung des ganzen Werkzeugs in radialer Richtung möglich sein.

Diese Aufgabe wird durch die im Anspruch 1 gekennzeichneten Merkmale gelöst. Durch die Schwenkbarkeit des Aufnahmestückes kann die Winkligkeit der Nebenschneide ohne Vor- oder Nachschleifen beliebig eingestellt werden. Dadurch, daß der Schwenkmittelpunkt mit dem Schnittpunkt der Haupt- und Nebenschneide zusammenfällt, wird die Lage der Hauptschneide insbesondere in axialer Richtung des zu schälenden Materials betrachtet, nicht verändert.

Die Ausbildung des Werkzeuges nach Anspruch 2 stellt eine besonders einfache Ausführungsform des Schwenklagers dar.

Obwohl eine Einstellung der Winkellage der Nebenschneide beliebig erfolgen kann, ist es vorteilhaft, das Werkzeug mit einer Verstelleinrichtung nach Anspruch 3 auszurüsten, wobei mit den Merkmalen des Anspruchs 4 eine besonders vorteilhafte Lösung aufgezeigt ist.

Mit der Ausbildung des Werkzeugs nach Anspruch 5 kann die Nebenschneide in radialer Richtung besonders feinfühlig eingestellt werden.

Ein Ausführungsbeispiel des Gegenstandes der Erfindung ist in der Zeichnung dargestellt und wird im folgenden näher beschrieben. Es zeigen:
Fig. 1 das Werkzeug in der Draufsicht auf den Schneideinsatz,

Fig. 2 das Werkzeug in einer Seitenansicht gemäß der Blickrichtung II in Fig. 1 mit Blick auf die Längsnut des GrundkörPers und auf das Einstellstück,

Fig. 3 das Werkzeug in einem Querschnitt längs der Linie III-III in Fig. 2,

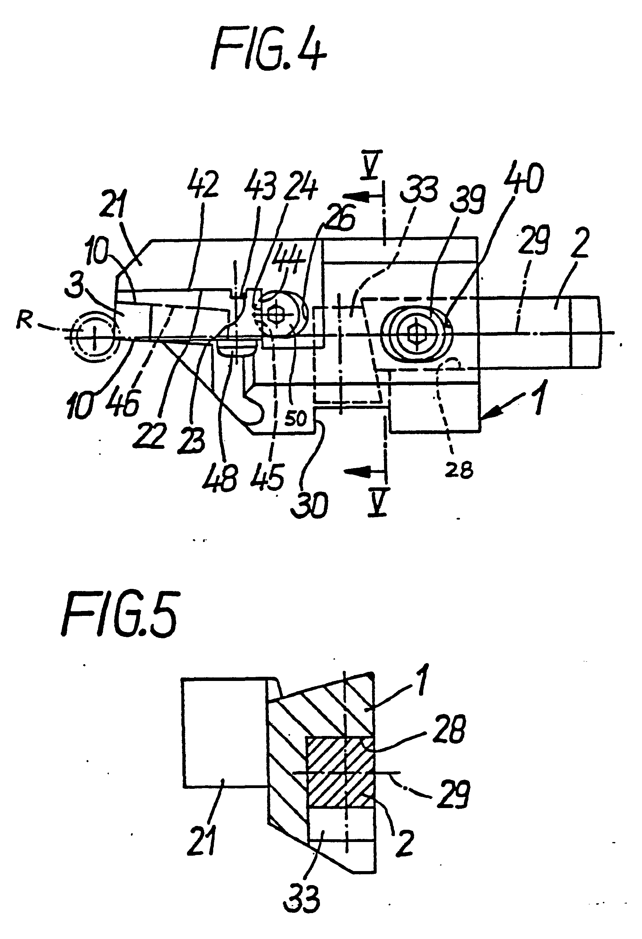

Fig. 4 das Werkzeug in einer Seitenansicht gemäß der Blickrichtung IV in Fig. 1,

Fig. 5 das Werkzeug in einem Querschnitt längs der Linie V-V in Fig. 4,

Fig. 6 die Unterseite oder Auflagefläche des Aufnahmestücks für die Wendeschneidplatte und die zugehörige Stellschraube in einer Explosionsdarstellung und

Fig. 7 die Elemente zur Längeneinstellung in einer Explosionsdarstellung.

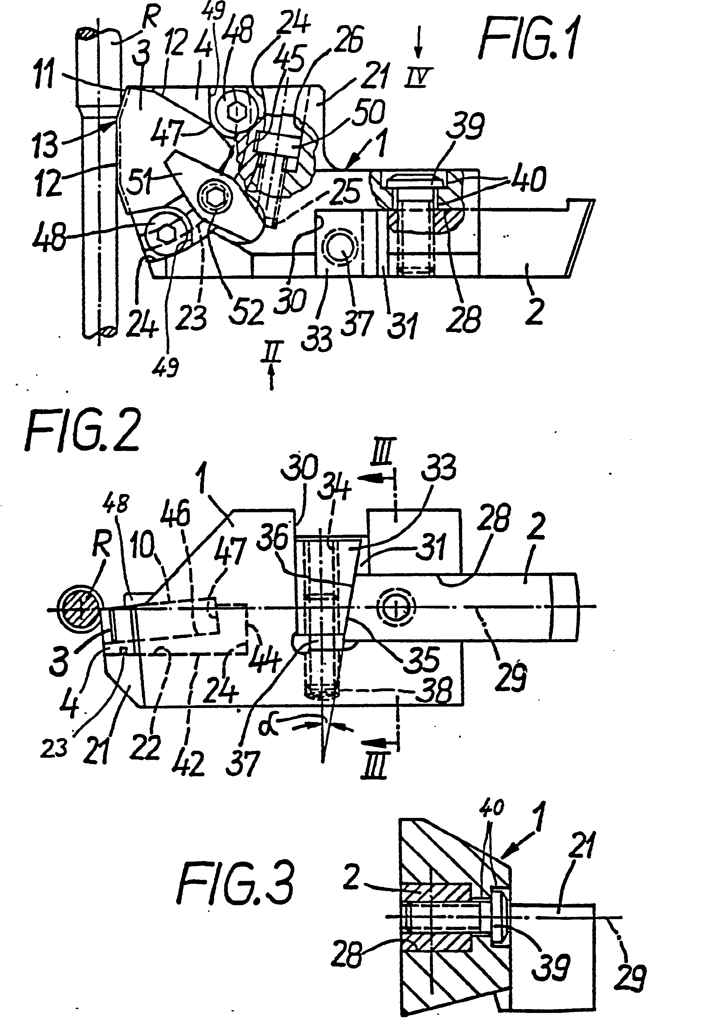

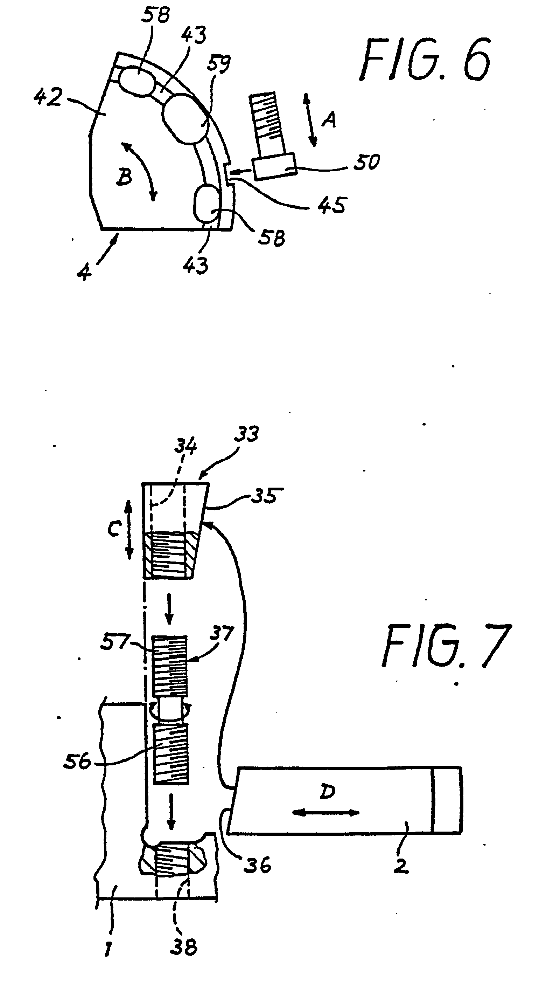

In den Fig. 2 und 5 ist die Pratze der Einfachheit halber weggelassen.

Das Schälwerkzeug nach Fig. 1 besteht aus einem Halter mit einem Grundkörper 1 und einem Einstellstück 2, dem Schneideinsatz in Form einer Wendeschneidplatte 3 und dem die Wendeschneidplatte 3 aufnehmenden Aufnahmestück

Die Wendeschneidplatte 3 weist zwei Parallel zueinander angeordnete Deck- bzw. Auflageflächen 10 auf und ist
- mit drei Hauptecken - neuneckig ausgebildet und besitzt Hauptschneiden 11 und Nebenschneiden 12. Der von der jeweils am zu schälenden Rundmaterial R im Eingriff befindlichen Hauptschneide 11 und Nebenschneide 12 gebildete Schnittpunkt ist mit 13 bezeichnet.

Der Grundkörper 1 besitzt einen breiten vorderen Teil 21 mit einer Auflagefläche 22 für das Aufnahmestück 4. Die Auflagefläche 22 weist eine kreisringförmige Erhebung 23 auf und ist durch eine dazu konzentrisch angeordnete hohlzylindrische Wandung 24 abgeschlossen. Sowohl der Mittelpunkt der kreisringförmigen Erhebung 23 als auch der Mittelpunkt bzw. die Achse der hohlzylindrischen Wandung 24 sind identisch mit dem Schnittpunkt 13 der Haupt- und Nebenschneide 11 und 12 bzw. gehen durch diesen hindurch.

Der vordere Teil 21 weist in einem geringen Abstand zu der hohlzylindrischen Wandung 24 eine mit einer Gewindebohrung 25 und einer hohlzylindrischen Erweiterung 26 versehene Ausnehmung auf.

An seinem von der Auflagefläche 22 wegweisenden Ende weist der Grundkörper 1 zur Führung des Einstellstücks 2 eine Nut 28 auf, die - abgesehen von einer geringen Spielpassung - den Abmessungen des Einstellstücks entspricht. Dabei verläuft die (gedachte) Mittelebene 29 der Nut 28 durch die im Einsatz befindliche Nebenschneide 12 der Wendeschneidplatte 3. Senkrecht zur Nut verläuft eine am Grundkörper angeordnete Stützfläche 30. Zwischen dieser Stützfläche 30 und der Nut 28 ist ein Zwischenraum 31 angeordnet, in dem sich ein Keil 33 mit einer Gewindebohrung 34 befindet. Die von der Stützfläche 30 wegweisende geneigte Fläche 35 des Keiles 33 drückt gegen die vordere, der Wendeschneidplatte 3 zugewandte Stirnfläche 36 des Einstellstücks 2, das die ° gleiche Neigung wie der Keil von z.B. α = 10 aufweist.

In dem Gewindeloch 34 des Keiles 33 befindet sich das eine Ende 57 eines Doppelgewindestiftes 37, die mit ihrem anderen Ende 56 in einem Gewindeloch 38 des Grundkörpers 1 steckt. Während das Gewindeloch 38 und das zugehörige Ende 56 der Doppelgewindeschraube 37 ein Normalgewinde mit der Steigung s aufweist, ist das Gewindeloch 34 des Keiles 33 und das zugehörige Ende 57 des Doppelgewindestiftes 37 mit Feingewinde mit einer geringeren Steigung s' versehen. Bei einer Rechtsdrehung des Doppelgewindestiftes 37 von 360 wird der Keil 33 somit nur um den Gleitweg (s - s') nach unten bewegt Durch die flache Neigung der Keilfläche 35 und der Stirnfläche 36 wird das Einstellstück 2 dabei nur um den Weg (s - s') x tan α bewegt. Ist beispielsweise die Steigung s = 1,25 mm, die Steigung s' = 0,75 mm und der Winkel α = 10, so entspricht eine Umdrehung des Doppelgewindestiftes 37 einem Gleitweg des Einzelstücks 2 von nur knapp 9/100 mm. Der Keil 33 ermöglicht also eine sehr feine Einstellung des Halters und damit der Nebenschneide 12 in radialer Richtung. Das Einstellstück 2 wird mit Hilfe einer Kopfschraube 39 am Grundkörper 1 gehalten. Um eine Verschiebung des Einstellstücks 2 zu ermöglichen, ist für die Kopfschraube 39 im Grundkörper 1 ein Langloch 40 vorgesehen.

Das Aufnahmestück 4 weist eine der Auflagefläche 22 entsprechende Auflage- oder Stützfläche 42 mit einer entsprechenden ringförmigen Nut 43 und eine der hohlzylindrischen Wandung 24 entsprechende zylindrische Wandung 44 auf. Der Mittelpunkt bzw. die Achse der Vertiefung oder Nut 43 und der Wandung 44, in die eine Ausnehmung oder Vertiefung 45 eingelassen ist, gehen - wie beim Grundkörper 1-durch den Schnittpunkt 13 der Hauptschneide 11 und der Nebenschneide 12 des Werkzeuges.

An seiner Oberseite weist das Aufnahmestück 4 eine Ausnehmung 46 auf, deren Kontur 47 einem Teil der Außenkontur der Wendeschneidplatte 3 entspricht. Das Aufnahmestück 4 wird durch zwei Kopfschrauben 48 am Grundkörper 1 festgehalten, wobei das Aufnahmestück 4 zur Auflage der Köpfe der Schrauben 48 an seiner Oberseite mit Vertiefungen bzw. Ausnehmungen 49 versehen ist. Die im Aufnahmestück 4 für die Schrauben vorgesehenen Durchgangslöcher 58 sind als Langlöcher ausgebildet, um eine Schwenkbewegung des Aufnahmestücks 4 gegenüber dem Grundkörper 1 ausführen zu können. Zum Verschwenken des Aufnahmestücks 4 und der Wendeschneidplatte 3 dient eine Kopfschraube 50, die mit ihrem Gewindeteil in der Gewindebohrung 25 ist, und deren Kopf in die Ausnehmung 45 des Aufnahmestücks 4 eingreift. Bei einer Steigung des Gewindeteils der Kopfschraube 50 von beispielsweise s = 1 mm und bei einem angenommenen Radius der Außenwandung 44 von 36 mm entspricht eine Drehung der Kopfschraube 50 um 10° der änderung der Winkellage der Nebenschneide 12 von nur 2,7 Winkelminuten (').

Zur Befestigung der Wendeschneidplatte 3 auf dem Werkzeug ist eine Pratze 51 vorgesehen, die mit Hilfe eines Gewindestiftes 52 mit Rechts- und Linksgewinde am Aufnahmestück 4 verspannt ist und die sich mit ihrem der Wendeschneidplatte 3 abgewandten Ende am Grundkörper 1 abstützt. Das im Aufnahmestück 4 für den Gewindestift 52 vorgesehene Durchgangsloch 59 ist als Langloch ausgebildet, um eine Schwenkbewegung des Aufnahmestücks 4 gegenüber dem Grundkörper 1 zu esmöglichen. Durch die Rechts- und Linksgewinde des Gewindestiftes 52 wird die Pratze 51 beim Lösen schnell und sicher von der Wendeschneidplatte abgehoben.

## Patentansprüche

1. Werkzeug mit einem Halter (1) und einem Schneideinsatz (3) für den umlaufenden Messerkopf einer Schälmaschine zum Schälen von Rundmaterial, wie Rohren, Rundstahl od. dg., wobei der Schneideinsatz (3) mindestens je eine Haupt- und eine Nebenschneide (11, 12) aufweist, dadurch gekennzeichnet, daß der Schneideinsatz (3) in einer Ausnehmung (46) eines Aufnahmestückes (4) angeordnet ist, wobei die Kontur (47) der Ausnehmung (46) einem Teil des Umfangs des Schneideinsatzes (3) entspricht, - und daß das Aufnahmestück (4) und der Halter (1) ein gemeinsames Schwenklager (23, 43) bilden, dessen Schwenkachse durch den Schnittpunkt (13) der zum Einsatz bestimmten Haupt- und Nebenschneide (11, 12) des Schneideinsatzes (3) geht.

2. Werkzeug nach Anspruch 1, dadurch gekennzeichnet, daß das vom Halter (1) und dem Aufnahmestück (4) gebildete Schwenklager - einen an einem (1) der beiden Teile (1, 4) angeordneten kreisringförmigen Vorsprung (23) - und in dem anderen Teil (4) eine entsprechende Nut (43) aufweist.

3. Werkzeug nach einem der Ansprüche 1 oder 2, dadurch gekennzeichnet, daß der Halter (1) eine Einrichtung (50) zum Verstellen der Drehlage des Aufnahmestücks (4) aufweist.

4. Werkzeug nach Anspruch 3, dadurch gekennzeichnet, daß die Verstelleinrichtung durch eine Kopfschraube (50) gebildet wird, die mit ihrem Gewindeteil in eine in Halter (1) befindliche Gewindebohrung (25) und mit ihrem Kopf in eine Ausnehmung (45) am Aufnahmestück (4) eingreift.

5. Werkzeug nach einem der Ansprüche 1 bis 4, dadurch gekennzeichnet, - daß der Halter aus einem Grundkörper (1) und einem Einstellstück (2) zur Einstellung der radialen Lage des Schneideinsatzes (3) besteht, - daß der Grundkörper (1) zur Aufnahme des Einstellstückes (2) eine von dem Schneideinsatz (3) wegweisende Längsnut (28), deren Symmetrieebene (29) durch die Nebenschneide (12) des Schneideinsatzes (3) geht, und eine Anschlagfläche (30) aufweist, - und daß zwischen dem dem Schneideinsatz (3) zugewandten Stirnende (36) des Einstellstückes (2) und der Anschlagfläche (30) ein über eine Doppelgewindeschraube (37) mit dem Grundkörper (1) verbundener Keil (33) angeordnet ist.

## Claims

1. Tool having a holder (1) and a cutting insert (3) for the revolving cutter head of a peeling machine for peeling round material, such as tubes, round steel or the like, where the cutting insert (3) comprises at least one main and one secondary cutting edge (11, 12), characterised in that the cutting insert (3) is arranged in a recess (46) of a mounting piece (4), the contour (47) of the recess (46) corresponding to a part of the circumference of the cutting insert (3) and in that the mounting piece (4) and the holder (1) form a common pivot bearing (23, 43) the pivot axis of which passes through the point (13) of intersection of the main and secondary cutting edges (11, 12), intended for use, of the cutting insert (3).

2. Tool according to Claim 1, characterised in that the pivot bearing formed by the holder (1) and the mounting piece (4) comprises a projection (23) of annular form arranged on one of the two parts (1, 4) and a corresponding groove (43) in the other part (4).

3. Tool according to either one of Claims 1 or 2, characterised in that the holder (1) comprises a device (50) for adjusting the position in rotation of the mounting piece (4).

4. Tool according to Claim 3, characterised in that the adjusting device is formed by a headed screw (50) which engages with its threading part in a threaded bore (25) situated in the holder (1) and with its head in a recess (45) on the mounting piece (4).

5. Tool according to any one of Claims 1 to 4, characterised in that the holder consists of a basic body (1) and a setting piece (2) for setting the radial position of the cutting insert (3), in that the basic body (1) comprises for the reception of the setting piece (2) a longitudinal groove (28) facing away from the cutting insert (3), the plane (29) of symmetry of which passes through the secondary cutting edge (12) of the cutting insert (3), and a stop face (30), and in that between the face end (36) of the setting piece (2) facing towards the cutting insert (3) and the stop face (30) there is arranged a wedge (33) connected through a double-threaded screw (37) with the basic body (1).

## Revendications

1. Outil comportant un porte-outil (1) et une pièce d'insertion coupante (3) pour la tête porte-lames rotative d'une machine à décroûter permettant le décroûtage de produits ronds, comme les tubes, les ronds ou les produits analogues, la pièce d'insertion coupante (3) comportant au moins un taillant principal et un taillant secondaire (11, 12), caractérisé en ce que la pièce d'insertion coupante (3) est montée dans un évidement (46) d'une pièce de fixation (4), le contour (47) de l'évidement (46) correspondant à une partie du pourtour de la pièce d'insertion coupante (3), et en ce que la pièce de fixation (4) et le porte-outil (1) constituent ensemble un palier pivotant (22, 23) dont l'axe de pivotement passe par le point d'intersection (13) du taillant principal et du taillant secondaire (11, 12) de la pièce d'insertion coupante (3).

2. Outil selon la revendication 1, caractérisé en ce que le palier pivotant constitué par le porte-outil (1) et par la pièce de fixation (4) comporte une saillie (23) en forme d'anneau circulaire réalisée sur l'une (1) des deux pièces (1, 4), et, dans l'autre pièce (4), une rainure correspondante (43).

3. Outil selon l'une des revendications 1 ou 2, caractérisé en ce que le porte-outil (1) comporte un dispositif (50) pour le réglage de la position de rotation de la pièce de fixation (4).

4. Outil selon la revendication 3, caractérisé en ce que le dispositif de réglage est constitué par une vis à tête qui, par sa partie filetée, s'engage dans un alésage fileté (25) ménagé dans le porte-outil (1) et s'engage, par sa tête, dans un évidement (45) ménagé dans la pièce de fixation (4).

5. Outil selon l'une des revendications 1 à 4, caractérisé en ce que le porte-outil est constitué par un corps de base (1) et par une pièce de réglage (2) pour le réglage de la position radiale de la pièce d'insertion coupante (3), en ce que le corps de base (1) comporte, pour le logement de la pièce de réglage (2), une rainure longitudinale (28) qui part de la pièce d'insertion coupante (3), dont le plan de symétrie (29) passe par le taillant secondaire (12) de la pièce d'insertion coupante (3), et qui comporte une surface de butée (30), et en ce qu'entre l'extrémité frontale (36) de la pièce de réglage (2) qui est tournée vers la pièce d'insertion coupante (3) et la surface de butée (30), il comporte un coin (33) relié au corps de base (1) par une vis à double filetage (37).

FIG.1

FIG.2

FIG.3

# FIG.4

# FIG.5

FIG. 6

FIG. 7